Europäisches Patentamt

(19) European Patent Office

Office européen des brevets

(11) Veröffentlichungsnummer: **0 186 736**
**B1**

(12) # EUROPÄISCHE PATENTSCHRIFT

(45) Veröffentlichungstag der Patentschrift:
26.07.89

(51) Int. Cl.⁴: **C 08 G 77/34,** C 08 J 11/06, H 01 B 3/46, C 10 M 107/50

(21) Anmeldenummer: 85112151.7

(22) Anmeldetag: 25.09.85

(54) **Verfahren zur Reinigung von Siliconöl.**

(30) Priorität: 13.11.84 DE 3441353
08.03.85 DE 3508219

(43) Veröffentlichungstag der Anmeldung:
09.07.86 Patentblatt 86/28

(45) Bekanntmachung des Hinweises auf die Patenterteilung:
26.07.89 Patentblatt 89/30

(84) Benannte Vertragsstaaten:
DE GB IT

(56) Entgegenhaltungen:
DE-C- 813 189
GB-A- 2 015 825
GB-A- 2 093 855
US-A- 3 838 056

CHEMICAL ABSTRACTS, Band 88, Nr. 14, 3. April 1978, Seite 43, Zusammenfassung 90648m, Columbus, Ohio, US; & JP - A - 77 41 313 (M. ABE) 18.10.1977
CHEMICAL ABSTRACTS, Band 83, Nr. 16, 20. Oktober 1975, Seite 645, Zusammenfassung 140880a, Columbus, Ohio, US; & JP - A - 75 41 098 (HITACHI LTD.) 15.04.1975

(73) Patentinhaber: Licentia Patent-Verwaltungs-GmbH, Theodor-Stern-Kai 1, D-6000 Frankfurt/Main 70 (DE)

(72) Erfinder: George, Ulf, Burgunderweg 9, D-7900 Ulm (DE)
Erfinder: Merk, Hans, Bruckackerstrasse 17, D-7900 Ulm-Gögglingen (DE)
Erfinder: Rochau, Erwin, Angerstrasse 58, D-7915 Elchingen 1 (DE)
Erfinder: Behnke, Joachim, Starenweg 3, D-7915 Elchingen 1 (DE)

(74) Vertreter: Schulze, Harald Rudolf, Dipl.-Ing., Licentia Patent-Verwaltungs-GmbH Theodor-Stern-Kai 1, D-6000 Frankfurt/Main 70 (DE)

ACTORUM AG

## Beschreibung

Die Erfindung betrifft ein Verfahren zur Reinigung von Siliconöl nach dem Oberbegriff des Patentanspruchs 1.

Die Erfindung ist insbesondere anwendbar auf Siliconöl, das zur elektrischen Isolation sowie Kühlung von elektrischen Hochspannungsgeräten benutzt wird. Ein derartiges Siliconöl sollte frei von Verunreinigungen sein, so dass eine möglichst hohe elektrische Durchschlagfestigkeit, z.B. grösser als 60 kV/2,5 mm vorhanden ist. Bei einer solchen Verwendung bewirken nahezu unvermeidliche Verunreinigungen, dass nach einer bestimmten Betriebsdauer die Durchschlagfestigkeit sinkt, z.B. auf einen Wert von ungefähr 15 kV/2,5 mm. Derartig verunreinigtes Siliconöl führt in nachteiliger Weise zu Betriebsstörungen oder sogar zu Zerstörung des beispielhaft erwähnten Hochspannungsgerätes.

Es ist naheliegend, das verunreinigte Siliconöl durch neues (ungebrauchtes) Siliconöl zu ersetzen, aus dem lediglich die darin gelösten Gase, z.B. Luft, entfernt wurden, z.B. durch Ausheizen bei vermindertem Luftdruck (Vakuum). Ein derartiges Verfahren ist kostenungünstig und daher unwirtschaftlich.

Alternativ dazu wurde versucht, das verunreinigte Siliconöl durch Vakuumdestillation zu reinigen. Eine derartige Reinigung wird durch starke Schaumbildung in unwirtschaftlicher Weise behindert oder sogar verhindert.

Die erwähnten Verunreinigungen bestehen unter anderem aus Wasser das in Siliconöl sowohl chemisch gebunden (bis zu 45 ppm) als auch physikalisch gelöst sein kann. Eine derartige Wasser-Verunreinigung bewirkt ebenfalls eine störende Erniedrigung der Durchschlagsfestigkeit. Aus der Literatur sind Verfahren zur Reinigung von Siliconöl bekannt.

Beispielsweise wird in CHEMICAL ABSTRACTS, Band 88, Nr. 14, 3. April 1978, Seite 43, Zusammenfassung 90648m, Columbus, Ohio, US; & JP-A-77 41 313 (ABE) 18.10.1977 eine Reinigung von Siliconöl mit Hilfe von aktivem Ton und Aktivkohle angegeben, es wird aber nicht erwähnt welcher Reinheitsgrad erreicht wird. Insbesondere wird keine Angabe darüber gemacht ob auch chemisch gebundenes Wasser entfernt werden kann.

Aus CHEMICAL ABSTRACTS, Band 83, Nr. 16, 20. Oktober 1975, Seite 645, Zusammenfassung 140990a, Columbus, Ohio, US; & JP-A 75 41 098 (HITACHI LTD.) 15.04.1975 ist ebenfalls ein Reinigungsverfahren für Siliconöl bekannt. Damit ist aber lediglich ein minimaler Wassergehalt von 42 ppm erreichbar, das heisst, es wird offensichtlich lediglich das physikalisch gelöste Wasser entfernt.

Aus der DE-C-813 189 ist bekannt, Altöl, insbesondere Transformatorenöl, mit Hilfe von Bleicherde zu reinigen. Es wird kein Hinweis gegeben wie Siliconöl so zu reinigen ist, dass ein möglichst geringer Wassergehalt erreichbar ist.

Der Erfindung liegt daher die Aufgabe zugrunde, ein kostengünstig durchführbares Verfahren anzugeben, mit welchem eine Reinigung von Siliconöl möglich wird, das insbesondere als Kühl- und/oder Isolationsmittel in elektrischen Geräten angewendet wird, und mit welchem eine möglichst hohe elektrische Durchlagfestigkeit erreichbar wird.

Diese Aufgabe wird gelöst durch die im kennzeichnenden Teil des Patentanspruchs 1 angegebenen Merkmale. Zweckmässige Ausgestaltungen sind den Unteransprüchen entnehmbar.

Ein erster Vorteil der Erfindung besteht darin, dass eine unwirtschaftliche und umweltbelastende Vernichtung von verschmutztem Siliconöl entfällt.

Ein zweiter Vorteil besteht darin, dass lediglich kostengünstig durchführbare Arbeitsvorgänge benötigt werden, um das verschmutzte Siliconöl zu reinigen.

Die Erfindung beruht auf der Erkenntnis, dass das Siliconöl verunreinigt wird im wesentlichen durch organische Substanzen, Schwebstoffe, Wasser sowie die bereits erwähnten Gase, z.B. Luft.

Die Erfindung wird im folgenden anhand von Ausführungsbeispielen näher erläutert.

Aus einem beispielhaften Hochspannungsgerät wird zunächst das verunreinigte Siliconöl abgelassen und in einem Gefäss aufgefangen. Das an sich farblose Siliconöl besitzt eine von den Verunreinigungen herrührende Gelbfärbung und eine elektrische Durchschlagfestigkeit von ungefähr 15 kV/2,5 mm. Zu diesem verunreinigtem Siliconöl werden nun ein Trocknungsmittel sowie ein Adsorptionsmittel zugefügt. Das Trocknungsmittel enthält z.B. die Materialien Molekularsieb 0,3 nm und/oder ein Silicagel und/oder ein aktives Aluminiumoxid. Die Menge des zugegebenen Trocknungsmittels beträgt einige Gramm pro Liter des zu reinigendem Siliconöls und ist abhängig von dessen Wassergehalt. Als Adsorptionsmittel dient zur Entfernung organischer Verunreinigungen z.B. Aktivkohle und/oder aktivierte Bleicherde. Die Menge des zugegebenen Adsorptionsmittels beträgt einige Gramm pro Liter des zu reinigenden Siliconöls.

Durch eine mechanische Bewegung, z.B. Rühren und/oder Schütteln, wird eine vorzeitige Sedimentation des Trocknungsmittels und/oder des Adsorptionsmittels vermieden. Nach einer von der geforderten Reinheit des Siliconöls abhängigen Einwirkzeit, von z.B. acht Stunden, wird die mechanische Bewegung beendet. Es erfolgt eine Sedimentation des Trocknungs- und des Adsorptionsmittels. Das darüber befindliche Siliconöl wird abgesaugt, z.B. nach einer Standzeit von 2 bis 3 Tagen, und durch mehrere Filtriervorgänge unter Anwendung von Druck weiter gereinigt. Die dabei verwendeten Filter besitzen Porengrössen im Bereich von 1 µm bis 0,45 µm. Das derart gereinigte Siliconöl wird anschliessend entgast durch Erhitzen, z.B. auf 95 °C, im Vakuum. Dieses wird durch eine sogenannte Vorvakuumpumpe erzeugt und beträgt ungefähr 0,1 Torr. Das derart behandelte Siliconöl ist farblos und besitzt eine Durchschlagfestigkeit gleich oder grösser als 60 kV/2,5 mm ist daher für die eingangs erwähnten Kühl- und/oder Isolationsmittel geeignet.

In einem weiteren Ausführungsbeispiel wird dem zu reinigendem Siliconöl, das z.B. zur Kühlung und/oder elektrischen Isolation in elektrischen Hochspannungsgeräten verwendet wird, zunächst ein festes Adsorptionsmittel, z.B. Bleicherde und/oder Aktivkohle, sowie ein festes Trocknungsmittel, z.B. Silicagel, hinzugefügt. Dabei dient das Trocknungsmittel lediglich zu einer Vortrocknung des Siliconöls. Nach einer gewissen Einwirkzeit, z.B. acht Stunden, in welcher das Siliconöl mechanisch bewegt wird, werden das feste Adsorptionsmittel sowie das feste Trocknungsmittel entfernt, z.B. durch einen Filtrier- und/oder Sedimentationsvorgang. Während der Einwirkzeit und nach Abtrennung des Trocknungsmittels wird durch das Siliconöl ein extrem trockenes Inertgas eingeleitet, z.B. Stickstoff und/oder ein Edelgas. Dieses geschieht z.B. mit Hilfe mindestens einem Einleitungsrohr aus Glas, an dessen einem Ende sich eine sogenannte Fritte befindet, mit welcher fein verteilte Gasblasen erzeugt werden. Bei einer zu trocknenden Menge von ungefähr 50 Liter bis 100 Liter Siliconöl werden ungefähr 500 l bis 1000 l Inertgas/Stunde benötigt bei einer Trocknungsdauer von ungefähr 4 Stunden bis 8 Stunden.

Es ist nun besonders vorteilhaft, als Inertgas gasförmigen Stickstoff zu verwenden, der aus derzeit kostengünstig käuflichem flüssigen Stickstoff hergestellt wird, z.B. durch Erhitzen. Ein derart hergestellter gasförmiger Stickstoff ist frei von störenden Verunreinigungen, z.B. Maschinenöl, und besitzt einen extrem niedrigen Feuchtigkeitsgehalt, z.B. weniger als 0,1 ppm Wasser. Dieser gasförmige Stickstoff wird nun erwärmt, z.B. auf eine Temperatur von ungefähr 30 °C, und solange durch das vorgereinigte Siliconöl geleitet bis dessen Wassergehalt auf einem Wert kleiner oder gleich 1 ppm abgesunken ist.

Es ist möglicherweise zweckmässig, das derart getrocknete Siliconöl durch Durchleiten von Helium und durch Erhitzen im Vakuum zu entgasen.

Ein derartig aufbereitetes Siliconöl besitzt eine Durchschlagfestigkeit von ungefähr 80 kV/2,5 mm. Diese wurde mit Kugelkalotten gemessen entsprechend der derzeit gültigen deutschen Norm VDE 0370/10.66.

Die Erfindung ist nicht auf das beschriebene Ausführungsbeispiel beschränkt, sondern sinngemäss auf weitere anwendbar. Beispielsweise ist es möglich statt des gasförmigen Stickstoffs als Inertgas das Edelgas Helium zu verwenden.

Da Helium derzeit ein sehr teures Edelgas ist, ist es allerdings unwirtschaftlich, die Trocknung des Siliconöls allein durch Durchleiten von Helium durchzuführen.

Das Siliconöl wird daher zunächst in beschriebener Weise durch Durchleiten von gasförmigem Stickstoff getrocknet. Es wurde festgestellt, dass danach indem Siliconöl ein $N_2$-Rest verbleibt in einer Konzentration von ungefähr 0,17 cm³/g Siliconöl. Diese gelöste Menge $N_2$ muss bisher durch eine Vakuumbehandlung entfernt werden, da insbesondere bei Temperatur- bzw. Druckänderungen in den beispielhaft erwähnten Hochspannungsgeräten Gasblasen gebildet werden, an denen bevorzugt elektrische Durchschläge erfolgen können. Zur Vermeidung dieses Nachteils ist es aus wirtschaftlichen Gründen zweckmässig, nach der $N_2$-Trocknung gasförmiges trockenes Helium, das möglicherweise ebenfalls erhitzt wird, durch das Siliconöl zu leiten. Dadurch wird der $N_2$-Rest im wesentlichen ausgetrieben. Es verbleibt ein Helium(He)-Rest, der jedoch eine wesentlich geringere Konzentration besitzt als der $N_2$-Rest. Es ist weiterhin möglich, während der $N_2$-Trocknung und/oder während des nachfolgenden Durchleitens von Heliumgas das Siliconöl durch Ultraschall anzuregen. Dadurch entstehen grosse Gasblasen aus $N_2$ und/oder He, die durch Aufsteigen aus dem Siliconöl entweichen. Es verbleibt ein Gasrest, der durch nachfolgendes Entgasen im Vakuum entfernt wird. Dieser Vorgang erfordert jedoch in wirtschaftlicher Weise lediglich eine geringe Zeit, die von der gewünschten Konzentration des Restgases abhängig ist.

## Patentansprüche

1. Verfahren zur Reinigung von Siliconöl, bei welchem in Siliconöl vorhandene Verunreinigungen durch Zugabe eines Trocknungsmittels sowie eines Adsorptionsmittels entfernt werden, dadurch gekennzeichnet,
- dass das Trocknungsmittel aus der Gruppe: Molekularsiebe, Silicagel, aktives Aluminiumoxid sowie Mischungen davon ausgewählt wird,
- dass das Adsorptionsmittel aus der Gruppe: Aktivkohle, aktivierte Bleicherde sowie Mischungen davon ausgewählt wird,
- dass das Trocknungsmittel und das Adsorptionsmittel auf das Siliconöl einwirken während einer Einwirkzeit, die von der geforderten Reinheit des Siliconöls abhängig ist,
- dass nach Ablauf der Einwirkzeit das Trocknungsmittel und das Adsorptionsmittel von dem Siliconöl durch Sedimentation sowie Filtration abgetrennt werden,
- dass während der Einwirkzeit und nach diesem Trennvorgang extrem trockenes Inertgas solange durch das Siliconöl geleitet wird, bis dieses einen vorgebbaren Rest-Wassergehalt besitzt, und
- dass anschliessend die im Siliconöl möglicherweise vorhandenen Gase durch Durchleiten von Helium sowie durch Erhitzen im Vakuum entfernt werden.

2. Verfahren zur Reinigung von Siliconöl nach Anspruch 1, dadurch gekennzeichnet, dass während der Einwirkzeit das Siliconöl derart bewegt wird, dass eine Sedimentation des Trocknungsmittels und/oder des Adsorptionsmittels vermieden wird.

3. Verfahren zur Reinigung von Siliconöl nach einem der vorhergehenden Ansprüche, dadurch gekennzeichnet, dass als Inertgas gasförmiger Stickstoff verwendet wird, der durch Erhitzen von flüssigem Stickstoff erzeugt wird.

4. Verfahren zur Reinigung von Siliconöl nach einem der vorhergehenden Ansprüche, dadurch gekennzeichnet, dass das Inertgas vor dem Einleiten in das Siliconöl erhitzt wird auf eine Temperatur, die in einem Temperaturbereich von 20 °C bis 80 °C liegt.

5. Verfahren zur Reinigung von Siliconöl nach einem der vorhergehenden Ansprüche, dadurch gekennzeichnet, dass das Inertgas einen Wassergehalt von kleiner als 0,1 ppm besitzt und solange durch das Siliconöl geleitet wird bis dessen Wassergehalt auf einen Wert kleiner als 1 ppm verringert wird.

6. Verfahren zur Reinigung von Siliconöl nach einem der vorhergehenden Ansprüche, dadurch gekennzeichnet, dass das Siliconöl zur Entgasung im Vakuum auf eine Temperatur erhitzt wird, die im Bereich von 50 °C bis 110 °C liegt und vorzugsweise 95 °C beträgt.

7. Verfahren zur Reinigung von Siliconöl nach einem der vorhergehenden Ansprüche, dadurch gekennzeichnet, dass eine Ultraschallanregung des Silikonöls angewandt wird zur Entfernung von Gasresten aus dem Siliconöl.

## Revendications

1. Procédé d'épuration de l'huile silicone, par lequel les impuretés en suspens dans celle-ci sont éliminées par adjonction d'un siccatif ainsi que d'un adsorbant, caractérisé par le fait
   - que le siccatif est choisi parmi l'un des éléments suivants, ou une combinaison de ceux-ci: tamis moléculaire, gel de silice, alumine active;
   - que l'adsorbant est choisi parmi l'un des éléments suivants, ou une combinaison de ceux-ci: carbone actif, argile décolorante activée;
   - que siccatif et adsorbant affectent ensemble l'huile silicone durant un laps de temps dépendant du degré de pureté exigé;
   - que, ce laps de temps écoulé, siccatif et adsorbant sont séparés de l'huile silicone par sédimentation et par filtrage;
   - que, durant l'action du siccatif et de l'adsorbant sur l'huile silicone et après leur séparation de celle-ci, un gaz inerte extrêmement sec est insufflé dans l'huile silicone, aussi longtemps que nécessaire pour que celle-ci accuse une teneur définissable en eau résiduelle et
   - que, finalement, les gaz éventuellement présents dans l'huile silicone sont éliminés par un apport d'hélium ainsi que par cuisson sous vide.

2. Procédé d'épuration de l'huile silicone selon la revendication 1, caractérisé par le fait que, durant l'action du siccatif et de l'adsorbant, l'huile silicone est agitée de telle manière que la sédimentation du siccatif et/ou de l'adsorbant soit évitée.

3. Procédé d'épuration de l'huile silicone selon l'une des revendications précédentes, caractérisé par le fait que, en tant que gaz inerte, il sera utilisé de l'azote sous forme gazeuse, gagné par échauffement d'azote liquide.

4. Procédé d'épuration de l'huile silicone, selon l'une des revendications précédentes, caractérisé par le fait que le gaz inerte insufflé dans l'huile silicone sera préalablement échauffé à une température située entre 20 et 80 °C.

5. Procédé d'épuration de l'huile silicone, selon l'une des revendications précédentes, caractérisé par le fait que le gaz inerte accuse une teneur en eau inférieure à 0,1 ppm et est insufflé dans l'huile silicone aussi longtemps que nécessaire pour que la teneur en eau de celle-ci atteigne une valeur inférieure à 1 ppm.

6. Procédé d'épuration de l'huile silicone, selon l'une des revendications prédédentes, caractérisé par le fait que, pour être dégazée, l'huile silicone va être échauffée sous vide à une température allant de 50 à 110 °C, de préférence à 95 °C.

7. Procédé d'épuration de l'huile silicone, selon l'une des revendications précédentes, caractérisé par le fait que l'huile silicone sera soumise à un bombardement d'ultrasons afin d'en éliminer les gaz résiduels.

## Claims

1. Method for the cleaning of silicone oil, in which contaminations present in the silicone oil are removed by addition of a drying agent as well as of an adsorbing means, characterised thereby,
   - that the drying agent is selected from the group comprising molecular sieves, silica gel and active aluminium oxide as well as mixtures thereof,
   - that the adsorbing means is selected from the group comprising active carbon and activated bleaching earth as well as mixtures thereof,
   - that the drying agent and the adsorbing means act on the silicone oil during an action time which is dependent on the demanded purity of the silicone oil,
   - that the drying agent and the adsorbing means are separated from the silicone oil by sedimentation as well as filtration after run-down of the action time,
   - that during the action time ad after this separating process, extremely dry inert gas is conducted through the silicone oil until this possesses a predeterminable residual water content and
   - that the gases possibly present in the silicone oil are subsequently removed by the passing-through of helium as well as by heating in vacuum.

2. Method for the cleaning of silicone oil according to claim 1, characterised thereby, that the silicone oil is moved during the action time in such a manner that a sedimentation of the drying agent and/or of the adsorbing medium is avoided.

3. Method for the cleaning of silicone oil according to one of the preceding claims, characterised thereby, that gaseous nitrogen, which is produced by heating of liquid nitrogen, is used as inert gas.

4. Method for the cleaning of silicone oil according to one of the preceding claims, characterised thereby, that the inert gas is heated to a temperature, which lies in a temperature range of 20 °C to 80 °C, before the introduction into the silicone oil.

5. Method for the cleaning of silicone oil according to one of the preceding claims, characterised thereby, that the inert gas possesses a water content of less than 0.1 parts per million and is conducted through the silicone oil until its water content is reduced to a value of less than 1 part per million.

6. Method for the cleaning of silicone oil according to one of the preceding claims, characterised thereby, that the silicone oil is heated for degasification in vacuum to a temperature which lies in the range of 50 °C to 110 °C and preferably amounts to 95 °C.

7. Method for the cleaning of silicone oil according to one of the preceding claims, characterised thereby, that an ultrasonic excitation of the silicone oil is applied for the removal of gas residues from the silicone oil.